# EUROPÄISCHE PATENTANMELDUNG

(11) **EP 3 598 719 A1**
(43) Veröffentlichungstag der Anmeldung: **22.01.2020**
(21) Anmeldenummer: 18183702.2
(22) Anmeldetag: 16.07.2018
(51) Int. Cl.: H04L 29/08, H04L 12/18, H04L 29/06

(54) **VERFAHREN ZUR DATEN-KOMMUNIKATION IN EINEM INSBESONDERE INDUSTRIELLEN NETZWERK, STEUERUNGSVERFAHREN, VORRICHTUNG, COMPUTERPROGRAMM UND COMPUTERLESBARES MEDIUM**

(71) Anmelder: Siemens Aktiengesellschaft, 80333 München (DE)
(72) Erfinder: Fischer, Thomas, 91058 Erlangen (DE); Höme, Stephan, 91126 Schwabach (DE); Jung, Konstantin, 90537 Feucht (DE); Kerschbaum, Sven, 90768 Fürth (DE); Kießling, Marcel, 91235 Velden (DE); Volkmann, Frank, 90475 Nürnberg (DE)

(57) **Zusammenfassung**

Die Erfindung betrifft ein Verfahren zur Daten-Kommunikation in einem insbesondere industriellen Netzwerk unter Verwendung von OPC UA, insbesondere OPC UA PubSub, bei dem Daten von einem oder mehreren Publishern (P) an einen oder mehrere Subscriber (S1, S2, S3) gesendet werden, wobei überwacht wird, ob sich die Anzahl der Subscriber (S1, S2, S3) wenigstens eines Publishers (P) ändert und in Reaktion auf eine Änderung der Anzahl der von wenigstens einem Publisher (P) verwendete Transportmechanismus geändert wird, und/oder überwacht wird, ob sich die Menge an Datenverlust ändert, und in Reaktion auf eine Änderung der Menge an Datenverlust der von wenigstens einem Publisher (P) verwendete Transportmechanismus geändert wird, und/oder überwacht wird, ob sich die Netzwerkauslastung ändert und in Reaktion auf eine Änderung der Netzwerkauslastung der von wenigstens einem Publisher (P) verwendete Transportmechanismus geändert wird. Darüber hinaus betrifft die Erfindung ein Steuerungsverfahren, eine Vorrichtung, ein Computerprogramm sowie ein computerlesbares Medium.

## Beschreibung

Verfahren zur Daten-Kommunikation in einem insbesondere industriellen Netzwerk, Steuerungsverfahren, Vorrichtung, Computerprogramm und computerlesbares Medium

Die Erfindung betrifft ein Verfahren zur Daten-Kommunikation in einem insbesondere industriellen Netzwerk unter Verwendung von OPC UA, insbesondere OPC UA PubSub, bei dem Daten von einem oder mehreren Publishern an einen oder mehrere Subscriber gesendet werden. Darüber hinaus betrifft die Erfindung ein Steuerungsverfahren, eine Vorrichtung, ein Computerprogramm sowie ein computerlesbares Medium.

OPC UA (OPC Unified Architecture) ist ein industrielles Standardprotokoll der OPC Foundation zur hersteller-unabhängigen Kommunikation für den Austausch von Maschinendaten insbesondere in der Prozessautomatisierung.

OPC UA PubSub (Publish/Subscribe) ist eine Erweiterung des bisherigen Client/Server-basierten Ansatzes von OPC UA, welcher unter anderem eine Integration einfacher (Feld-)Geräte an eine Cloud und auch die Kommunikation zwischen einfachen Feldgeräten und zwischen Steuerungen ermöglicht. OPC UA PubSub stellt somit grundlegenden Baustein zur Umsetzung von IIoT (Industrial Internet of Things) und Industrie 4.0 Anwendungen dar. PubSub ermöglicht dabei auch Kommunikationsbeziehungen von einem Publisher zu n Subscribern.

Von der OPC Foundation (https://opcfoundation.org/) ist eine mehrteilige Spezifikation zu OPC Unified Architecture veröffentlicht worden (https://opcfoundation.org/developertools/specifications-unified-architecture/). Die PubSub-Erweiterung ist in Teil 14 der Spezifikation näher erläutert (OPC Foundation: OPC Unified Architecture, Part 14: PubSub, Release 1.04, 6. Februar 2018, https://opcfoundation.org/developer-tools/specificationsunified-architecture/part-14-pubsub/).

OPC UA ist auch in Kapitel 4 des vom DIN Institut für Normung e.V. herausgegebenen Buches "Industrie 4.0 - Industrielle Kommunikation - Basistechnologie für die Digitalisierung der Industrie" von Markus Weinländer, 2017, VDE Verlag, ISBN 978-3-8007-4262-2 (VDE Verlag) behandelt.

Die Übertragung echtzeitkritischer Daten mittels OPC UA PubSub kann auf der Verwendung von TSN-Streams basieren.

TSN (Time Sensitive Networking) bezeichnet eine Reihe von Standards, die den Bridging Standard IEEE 802.1Q um Mechanismen zur Übertragung echtzeitkritischer Daten über Ethernet-Netze erweitert. Zu den genannten Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards.

Mit TSN ist ein Standard definiert, der die Qualität (Quality of Service - QoS oder auch Dienstgüte) in einem Netzwerk in Form von Streams garantiert. Ein Stream stellt eine in der Regel unidirektionale Kommunikationsverbindung von einer Quelle (Talker) zu einem oder mehreren Senken (Listener) dar. Ein Talker verschickt Daten in der Regel periodisch bzw. kontinuierlich an einen oder mehrere Listener.

Es sei angemerkt, dass auf der Kommunikationsebene (TSN-Netz) üblicherweise bei einer Daten-Quelle vom einem Talker und einer Daten-Senke von einem Listener, auf der Anwendungsebene hingegen bei einer Daten-Quelle von einem Publisher und einer Daten-Senke von einem Subscriber gesprochen wird.

Bei der Übertragung von Daten mittels OPC UA PubSub basierend auf TSN stellt das TSN-Netz sicher, dass erforderliche Übertragungsqualitäten/Dienstgüten (beispielsweise maximale Endezu-Ende-Latenzzeiten, Jitter, garantierte Bandbreite) für die echtzeitkritische Kommunikation über die Dauer bzw. Lebenszeit eines TSN-Streams sichergestellt ist.

OPC UA PubSub kann verschiedene Transportmechanismen für den Datenaustausch zwischen Publisher und Subscriber verwenden:
- PubSub UDP Unicast (UDP Protokoll als 1:1 Beziehung)
- PubSub UDP Multicast (UDP Protokoll als 1:n Beziehung)
- PubSub UDP over TSN (UDP Protokoll in TSN-Tunnel als 1:n Beziehung)
- PubSub TSN (TSN-Stream als 1:n Beziehung)

Bei UDP handelt es sich um das als User Datagram Protocol bezeichnete Übertragungsprotokoll (siehe etwa RFC 768, RFC 8085). Unicast ist beispielsweise in RFC 791 und Multicast beispielsweise in RFC1112 thematisiert.

UDP Unicast ist ein sogenannter Best-Effort-Mechanismus, der über keine QoS-Zusicherung verfügt. Es ist eine 1:1 Beziehung, daher muss ein Netzwerkgerät, etwa in Form eines Switches, ein Telegramm nur an einen Teilnehmer senden. Unicast-Telegramme bzw. -Datenpakete sind in der Regel an einzelne Subscriber, also Empfänger, adressiert, der beispielsweise in Form eines an das Netzwerk angeschlossenen Endgerätes bzw. wenigstes einer darauf befindlichen Anwendung, etwa in Form eines Computerprogramms, vorliegen kann.

Sind hingegen mehrere Subscriber vorhanden, müssen für jeden Subscriber die gleichen Daten als UDP Unicast verschickt werden. UDP Unicast ähnelt somit dem TCP-basierten Client-Server-Mechanismus ohne Transportsicherung. Multicast-Pakete sind Datenpakete, die an mehrere Empfänger in einem Netzwerk weitergeleitet werden können. Es ist eine 1:n Beziehung.

UDP Multicast ist ebenfalls ein Best-Effort-Mechanismus, der über keine QoS-Zusicherung verfügt. Nach Standard IEEE 802.10 verhält sich ein Switch/eine Bridge in Grundeinstellung - ohne weitere Mechanismen, wie etwa IGMP(Internet Group Management Protocol) bzw. MMRP (Multiple MAC Registration Protocol) - wie bei einem Broadcast. Gesendet wird an alle Ports, außer an den Port, an dem das Paket empfangen wurde. Das Netzwerk wird dadurch sozusagen "geflutet". Bei mehreren Subscribern werden die Daten vom Publisher nur einmal als Telegramm verschickt, dieses wird von allen Subscribern empfangen. Die Komplexität wird vom Publisher auf das Netzwerk verlagert.

Grundsätzlich sind für den Tunnelmechanismus "UDP over TSN" Unicast und Multicast denkbar. Es gelten insbesondere alle Eigenschaften wie vorstehend genannt. Zusätzlich wird die Daten-Kommunikation durch den Tunnel (Stream) mit QoS-Eigenschaften ergänzt und geschützt. Solche TSN-Tunnel sind bezüglich Reservierung (IEEE 802.1Qav) und zeitgesteuert (IEEE 802.1Qbv) möglich.

Bei PubSub TSN werden die Nutzdaten (das UADP-Protokoll) direkt als TSN-Payload übertragen. Es werden keine weiteren Netzwerkadressierungsmechanismen (UDP/IP) genutzt.

Der Anmelderin ist bekannt, dass die Entscheidung, welcher Transportmechanismus genutzt wird, insbesondere, ob TSN für einen Bandbreitenschutz oder UDP Unicast bzw. Multicast (ohne TSN) zum Einsatz kommt, im Vorfeld - vor der eigentlichen Laufzeit - bei der applikativen Projektierung getroffen wird, dies ohne Kenntnis bzw. Berücksichtigung des konkreten Netzwerkes, insbesondere ohne Kenntnis bzw. Berücksichtigung der Anzahl der Subscriber und/oder der Netzwerkauslastung.

Bei der Projektierung, wenn das Netzwerk eingerichtet wird, wird ein Transportmechanismus ausgewählt, dies basierend auf den zu diesem Zeitpunkt zur Verfügung stehenden Informationen. Eine Anpassung bei zur Laufzeit auftretenden Problemen, etwa Datenverlust, kann nur durch eine neue Erstellung bzw. Anpassung der Projektierung erfolgen und es ist ein neuer Anlauf des Systems erforderlich, was mit hohem Arbeits- und Zeitaufwand verbunden ist.

Es ist eine Aufgabe der vorliegenden Erfindung, ein Verfahren der eingangs genannten Art anzugeben, welches eine besonders zuverlässige Datenübertragung bei gleichzeitig optimaler Nutzung vorhandener Netzwerkressourcen ermöglicht.

Diese Aufgabe wird bei einem Verfahren der eingangs genannten Art dadurch erreicht, dass überwacht wird, ob sich die Anzahl der Subscriber wenigstens eines Publishers ändert und in Reaktion auf eine Änderung der Anzahl der Subscriber wenigstens eines Publishers der von wenigstens einem Publisher verwendete Transportmechanismus insbesondere automatisch geändert wird, und/oder überwacht wird, ob sich die Menge an Datenverlust insbesondere für wenigstens einen Subscriber ändert, und in Reaktion auf eine Änderung der Menge an Datenverlust der von wenigstens einem Publisher verwendete Transportmechanismus insbesondere automatisch geändert wird, und/oder überwacht wird, ob sich die Netzwerkauslastung ändert und in Reaktion auf eine Änderung der Netzwerkauslastung der von wenigstens einem Publisher verwendete Transportmechanismus insbesondere automatisch geändert wird.

Der vorliegenden Erfindung liegt mit anderen Worten die Idee zugrunde, den Transportmechanismus, welcher zum Einsatz kommt, um Daten von einem oder mehreren Publishern an einen oder mehrere jeweils zugehörige Subscriber zu übermitteln, dynamisch umzuschalten, konkret in Abhängigkeit der aktuelle vorherrschenden Netzwerkgegebenheiten dynamisch anzupassen.

Die erfindungsgemäße Vorgehensweise ermöglicht eine bestmögliche Ausnutzung vorhandener Ressourcen, beispielsweise von Multicast DAs (DA wie üblich steht für designated adress), TSN-Streams und Bandbreite. Die Transportmechanismen können flexibel und automatisch an die tatsächliche Netzwerk- du Kommunikationssituation angepasst werden. Es können in einem Netzwerk verschiedene Transportmechanismen für verschiedene Publisher-Subscriber-Konstellationen zum Einsatz kommen, wodurch eine Verschwendung von Ressourcen an unnötiger Stelle zuverlässig vermieden werden kann.

Kommt das erfindungsgemäße Verfahren beispielsweise zur Daten-Kommunikation zwischen Anwendungen einer industriellen Automatisierungsanlage zum Einsatz, kann aufgrund der besonders zuverlässigen, eine optimale Ressourcen-Nutzung ermöglichenden Kommunikation ein besonders sicherere Betrieb bei gleichzeitig moderaten Kosten erreicht werden.

Unter dem von einem Publisher verwendeten Transportmechanismus ist dabei der Transportmechanismus zu verstehen, der zum Einsatz kommt, um Daten von dem (jeweiligen) Publisher an einen oder mehrere Subscriber zu übertragen. Die Formulierung der dem (jeweiligen) Publisher zugeordnete Transportmechanismus ist gleichbedeutend.

Bevorzugt wird der verwendete Transportmechanismus von dem wenigstens einen Publisher in Reaktion auf eine der genannten Änderungen insbesondere automatisch geändert.

Entsprechend ist besonders bevorzugt der wenigstens eine Publisher, sind besonders bevorzugt mehrere oder auch alle Publisher in einem Netzwerk ausgebildet und eingerichtet, um den von ihnen verwendeten Transportmechanismus in Reaktion auf eine Änderung der Subscriber-Anzahl und/oder Netzwerkauslastung und/oder des Datenverlustes automatisch zu ändern, insbesondere geeignet anzupassen. Die Information über Subscriber-Anzahl und/oder Netzwerkauslastung und/oder Datenverlust können der oder die Publisher von einer zentralen Netzwerk-Überwachungseinrichtung erhalten, mit welcher der bzw. die Publisher verbunden ist bzw. sind.

Weiterhin bevorzugt wird von wenigstens einem Publisher der von ihm verwendete Transportmechanismus in Reaktion auf eine Änderung der Anzahl seiner Subscriber, insbesondere von genau einem auf zwei oder mehr Subscriber, und/oder eine Änderung der Menge an Datenverlust insbesondere für wenigstens einen seiner Subscriber und/oder eine Änderung der Netzwerkauslastung insbesondere automatisch geändert.

Selbstverständlich kann auch von mehreren bzw. für mehrere Publisher(n) der von dem jeweiligen Publisher verwendete Transportmechanismus in Reaktion auf eine Änderung der Anzahl der Subscriber des jeweiligen Publishers und/oder in Reaktion auf eine Änderung der Menge an Datenverlust insbesondere für wenigstens einen Subscriber des jeweiligen Publishers und/oder in Reaktion auf eine Änderung der Netzwerkauslastung bevorzugt automatisch geändert werden. Dabei ist es auch möglich, dass von jedem Publisher, für den eine Änderung der Subscriber-Anzahl erfasst wird, der Transportmechanismus geändert wird.

Weiterhin wird bevorzugt von wenigstens einem, insbesondere jedem Publisher im Netzwerk ein Transportmechanismus verwendet, der ausgewählt ist aus der Gruppe
- PubSub UDP Unicast,
- PubSub UDP Multicast,
- PubSub UDP Unicast over TSN,
- PubSub UDP Multicast over TSN,
- PubSub TSN,
- PubSub TSN mit zyklischem Scheduler.

Wird von wenigstens einem Publisher ein Multicast-Transportmechanismus verwendet, kann vorgesehen sein, dass IGMP und/oder MMRP zur Begrenzung der Netzwerkflutung zum Einsatz kommt.

Es kann vorgesehen sein, dass zunächst eine Projektierung von Endgeräten erfolgt, wobei dann zum Beispiel zunächst ein Transportmechanismus ausgewählt wird, welcher zu Beginn des Betriebes des Netzwerks beispielsweise für alle Publisher gleich sein kann.

Bei PubSub ist in der Regel vorgesehen, dass ein Publisher beim Anlegen QoS-Anforderungen definiert. Bei diesen handelt es sich insbesondere um Zykluszeit und/oder Datenmenge und/oder Latenz und/oder Redundanz. Während Zykluszeit und Datenmenge in der Regel bereits bei UDP definiert werden bzw. zu definieren sind, können für TSN insbesondere Latenzanforderung und/oder Redundanz hinzukommen. Diese Informationen werden bei einem dezentralen Modell von dem Publisher an den TSN-Stack übergeben und dort findet ein Matching auf das Netzwerk statt. Am Ende kommt eine Information heraus, ob das Netz diese erfüllen kann. Es ist aber beispielsweise auch möglich, dass ein Anwender bei UDP nur Zykluszeit und Datenmenge projektiert und eine Umschaltung auf TSN ohne Latenzanforderung geschieht sondern nur für Bandbreitenschutz.

Das Netzwerk wird dann im Betrieb überwacht und es wird erfindungsgemäß in Reaktion auf eine Änderung der Netzwerkbegebenheiten für wenigstens einen Publisher der Mechanismus, mittels dem Daten von diesem an einen oder mehreren Subscriber übermittelt werden, geändert.

Was die Änderung des bzw. der Transportmechanismen angeht, stehen verschiedene Möglichkeiten zur Verfügung die von der jeweiligen konkreten Situation bzw. Situationsänderung im Netzwerk abhängen.

Beispielsweise wird für den Fall, dass die Anzahl der Subscriber im Netzwerk insbesondere um einen vorgegebenen Wert gestiegen ist, der von wenigstens einem Publisher verwendete Transportmechanismus bevorzugt automatisch von PubSub UDP Unicast zu PubSub UDP Multicast geändert.

Alternativ oder zusätzlich kann in einem solchen Falle der Transportmechanismus von PubSub UP Unicast over TSN zu PubSub UDP Multicast over TSN geändert werden.

Zweckmäßiger Weise erfolgt wenigstens eine der dieser Änderungen von wenigstens einem Publisher, dessen Subscriber-Anzahl gestiegen ist.

Besonders bevorzugt wird von einem Uni- zu einem Multicast-Transportmechanismus gewechselt, wenn von wenigstens einem Publisher, der zunächst nur genau einen Subscriber hat, einer oder mehrere weitere Anwendungen bzw. Geräte Daten beziehen möchten, die Anzahl seiner Subscriber also von genau einem auf zwei oder mehr Subscriber ansteigt.

Wollen mehrere Subscriber von einem Publisher Daten erhalten, stellt Multicast in der Regel den geeigneteren Transportmechanismus dar, da nicht für jeden der Subscriber nacheinander das gleiche Telegramm von dem Publisher bis zu den jeweiligen Subscriber gesendet wird, sondern ein Telegramm von diesem abgeht und an einem oder mehreren Netzwerkknotenpunkten, insbesondere Bridges und/oder Switches, an mehreren Ports weitergeleitet wird. Zumindest über das Pfadsegment bis zu dem nächstliegenden Knotenpunkt muss das Telegramm nur einmal für alle Subscriber und nicht für jeden der Subscriber einmal gesendet werden.

Für den umgekehrten Fall, bei dem ein Publisher zunächst mehrere Subscriber hat und die Subscriber-Anzahl dann auf nur einen Subscriber sinkt, ist selbstverständlich auch ein Wechsel in die umgekehrte Richtung, also von Multi- zu Unicast möglich. Entsprechend zeichnet sich eine weitere bevorzugte Ausführungsform des erfindungsgemäßen Verfahrens dadurch aus, dass für den Fall, dass die Anzahl der Subscriber wenigstens eines Publishers auf nur noch einen Publisher gesunken ist, der von dem wenigstens einen Publisher verwendete Transportmechanismus bevorzugt automatisch von PubSub UDP Multicast zu PubSub UDP Unicast, und/oder von PubSub UP Multicast over TSN zu PubSub UDP Unicast over TSN geändert wird.

Existiert nur ein Abnehmer von Daten, die von einem Publisher herausgegeben werden, stellt Multicast in der Regel den weniger Ressourcen-optimierten Mechanismus dar.

Zweckmäßiger Weise erfolgt wenigstens eine der vorgenannten Änderungen von wenigstens einem Publisher, dessen Subscriber-Anzahl gestiegen bzw. auf einen Subscriber gesunken ist.

Eine weitere vorteilhafte Ausführungsform zeichnet sich dadurch aus, dass für den Fall, dass die Auslastung des Netzwerkes, insbesondere der Jitter und/oder die Latenz und/oder der Paketverlust insbesondere für wenigstens einen Subscriber bevorzugt um einen vorgegebenen Wert gestiegen ist, der von wenigstens einem Publisher verwendete Transportmechanismus bevorzugt automatisch von PubSub UDP Unicast zu PubSub UDP Unicast over TSN, und/oder von PubSub UP Multicast zu PubSub UDP Multicast over TSN, und/oder von PubSub UDP Unicast over TSN zu PubSub TSN, insbesondere bei gleichbleibendem Shaper, und/oder von PubSub UDP Multicast over TSN zu PubSub TSN, insbesondere bei gleichbleibendem Shaper, und/oder von PubSub TSN zu PubSub TSN mit zyklischem Scheduler, insbesondere TAS, geändert wird.

Über einen Wechsel auf UDP UNI- bzw. Multicast over TSN bzw. PubSub TSN ggf. mit zyklischem Scheduler können aus ungeschützten geschützte Verbindungen (Streams) erhalten werden, für welche die Qualität (QoS) garantiert ist. Für den Fall, dass ein Problem auftritt, etwa wenigstens eine Anwendung, welche Daten in Echtzeit benötigt, von einer Störung durch eine angestiegene, zu hohe Auslastung betroffen ist, kann für diese flexibel auf TSN-Mechanismen zurückgegriffen werden, um auch in Zeiten der hohen Auslastung die rechtzeitigem, verlustfreie Übertragung zu gewährleisten. Für andere Anwendungen, welche Daten nicht in Echtzeit benötigen, kann hierauf auch verzichtet werden.

Welche der genannten Änderungen zum Tragen kommt, wird entsprechend zweckmäßiger Weise davon abhängen, von welchem Transportmechanismus jeweils auszugehen ist, welcher Mechanismus also bis zu der Registrierung der Änderung der Netzwerkbedingungen von dem jeweiligen Publisher genutzt wurde.

Sinkt hingegen die Auslastung, kommt eine Änderung in die jeweils umgekehrte Richtung in Frage. Entsprechend kann alternativ oder zusätzlich vorgesehen sein, dass für den Fall, dass die Auslastung des Netzwerkes, insbesondere der Jitter und/oder die Latenz, und/oder der Paketverlust insbesondere für wenigstens einen Subscriber, bevorzugt um einen vorgegebenen Wert gesunken ist, der von wenigstens einem Publisher veränderte Transportmechanismus bevorzugt automatisch von PubSub UDP Unicast over TSN zu PubSub UDP Unicast, und/oder von PubSub UP Multicast over TSN zu PubSub UDP Multicast, und/oder von PubSub TSN zu PubSub UDP Unicast over TSN, insbesondere bei gleichbleibendem Shaper, und/oder von PubSub TSN zu PubSub UDP Multicast over TSN, insbesondere bei gleichbleibendem Shaper, und/oder von PubSub TSN mit zyklischem Scheduler, insbesondere TAS, zu PubSub TSN ohne zyklischen Scheduler, geändert wird.

Die Ermittlung der aktuellen Anzahl der Subscriber und/oder der aktuellen Auslastung des Netzwerkes, insbesondere des Jitters und/oder der Latenz, und/oder des Paketverlustes bevorzugt für wenigstens einen Subscriber, kann durch Abfrage des Gerätestatus wenigstens eines Subscribers, insbesondere aller Subscriber sämtlicher Publisher, bevorzugt unter Nutzung von SNMP (Simple Network Management Protocol) und/oder durch Überwachung wenigstens eines Knotenpunktes erfolgen. Die Abfrage erfolgt bevorzugt kontinuierlich bzw. wiederholend, insbesondere mit einer vorgegebenen Taktung. Besonders bevorzug wird der Gerätstatus aller Subscriber sämtlicher Publisher und/oder aller Knotenpunkte überwacht.

Mittels SNMP kann insbesondere von einer zentralen Stelle, etwa einer zentralen Überwachungseinrichtung aus eine Überwachung eines bzw. mehrerer bzw. aller im Netzwerk befindlichen Geräte bzw. Komponenten erfolgen. Eine Änderung an einem Subscribers, der etwa in Form eines Endgerätes bzw. wenigstens einer auf einem solchen laufenden Anwendung, beispielsweise in Form eines Computerprogrammes, gegebenen sein kann, kann via SNMP auf einfache Weise detektiert werden, beispielsweise eine Änderung der Anzahl der jeweils in einem vorgegebenen Zeitintervall bei dem Subscriber ankommenden Datenpakete, über die eine Erhöhung bzw. ein Absenken einer Paket-Verlustarte erkannt werden kann.

Die zentrale Überwachungseinrichtung kann beispielsweise in Form eines Computers mit wenigstens einem Prozessor gegeben sein, auf welchem wenigstens eine SNMP-Anwendung installiert ist.

Gegenstand der vorliegenden Erfindung ist ferner ein Steuerungsverfahren für einen industriellen technischen Prozess oder ein Fahrzeug, bei dem zwischen wenigstens zwei Komponenten einer Automatisierungsanlage Daten unter Durchführung des erfindungsgemäßen Verfahrens zur Daten-Kommunikation ausgetauscht werden und auf Basis der ausgetauschten Daten eine Steuerung des industriellen technischen Prozesses oder Fahrzeugs erfolgt.

Ein weiterer Gegenstand der Erfindung ist eine Vorrichtung, die zur Durchführung des erfindungsgemäßen Verfahrens zur Daten-Kommunikation bzw. des erfindungsgemäßen Steuerungsverfahrens ausgebildet und eingerichtet ist, insbesondere umfassend:
- eines oder mehrere Geräte, die jeweils einen OPC UA Publisher in einem Netzwerk bilden,
- mehrere Geräte, die jeweils einen OPC UA Subscriber in dem Netzwerk bilden,
- Mittel, die ausgebildet und eingerichtet sind, um im Betrieb zu überwachen, ob sich die Anzahl der Subscriber wenigstens eines Publishers und/oder die Auslastung Netzwerkes ändert.

Weiterhin betrifft die Erfindung ein Computerprogramm, das Programmcodemittel zur Durchführung der Schritte des erfindungsgemäßen Verfahrens zur Daten-Kommunikation bzw. des erfindungsgemäßen Steuerungsverfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Daten-Kommunikation bzw. des erfindungsgemäßen Steuerungsverfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung einer Ausführungsform des Verfahrens der vorliegenden Erfindung unter Bezugnahme auf die beiliegende Zeichnung deutlich. Darin ist
- FIG 1: eine schematische Teildarstellung eines industriellen Netzwerkes mit mehreren Teilnehmern;
- FIG 2: ein einen Publisher darstellendes Geräte aus dem Netzwerk nach FIG 1 mit einem bzw. mehreren zugehörigen Subscribern;
- FIG 3: das industrielle Netzwerke aus FIG , welches um zwei weitere Teilnehmer erweitert wurde; und
- FIG 4: der Publisher und die zugehörigen Subscriber aus FIG 2, wobei andere Transportmechanismen genutzt werden.

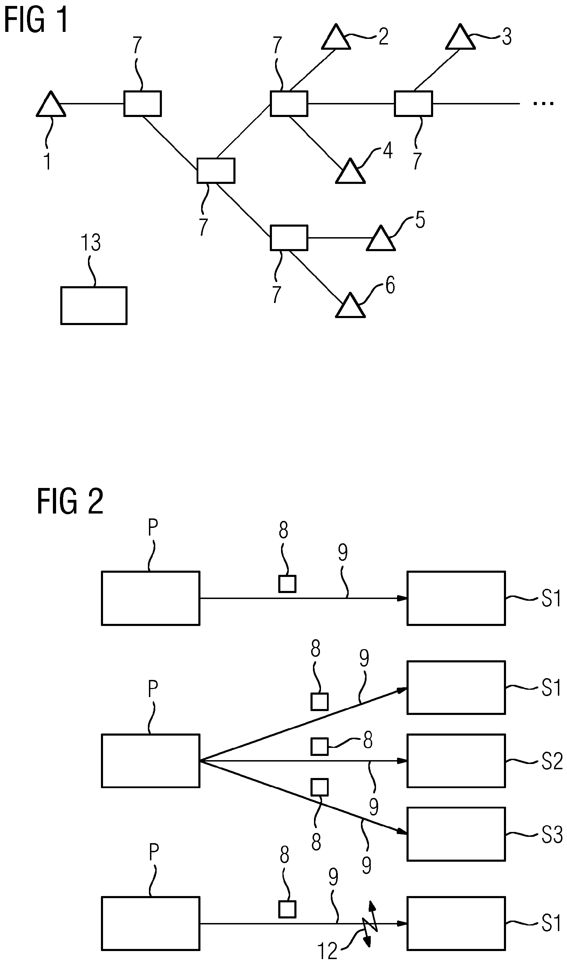

Die FIG 1 zeigt eine rein schematische Teildarstellung eines industriellen Ethernet-basierten Netzwerkes. Konkret sind mehrere Geräte 1, 2, 3, 4, 5, 6 zu erkennen, die über mehrere Netzwerknotenpunkte in Form von Switchen (oder auch Bridgen) 7 miteinander verbunden sind. Es sei angemerkt, dass neben den in der FIG 1 dargestellten Geräten 1-6 und Switchen 7 weitere Geräte und/oder Switche vorgesehen sein können bzw. sind, was in der FIG durch die drei Punkte rechts oben angedeutet ist.

Wie man der FIG 1 entnehmen kann, zeichnet sich das Netzwerk bei dem dargestellten Ausführungsbeispiel durch eine Baumtopologie aus. Selbstverständlich kann auch eine andere aus dem Stand der Technik bekannte Netzwerktopologie, z.B. eine Linie-, Stern- oder Ring-Topologie, vorgesehen sein.

Bei den Geräten 1-6 handelt es sich konkret um eine SPS 1 einer industriellen Automatisierungsanlage für einen nicht weiter dargestellten technischen Prozess, einen Bildschirm 2, auf dem für einen Bediener von der SPS 1 empfangene Daten visualisiert werden können, ein Bedienerpanel 3, an welchem ein Bediener Befehle eingeben kann, die an die SPS 1 übertragen werden, einen Sensor 4, welcher im Betrieb Messwerte erfasst und diesen an die SPS 1 übermittelt, und zwei Aktoren 5, 6 die von der SPS 1 zyklisch Steuersignale benötigen, um auf den industriellen technischen Prozess zyklisch einzuwirken.

Die Geräte 1-6 bzw. wenigstens eine auf dem jeweiligen Gerät laufende Anwendung, stellen dabei - je nachdem, ob sie Daten nur senden, nur empfangen oder sowohl senden als auch empfangen - OPC UA Publisher und/oder Subscriber dar.

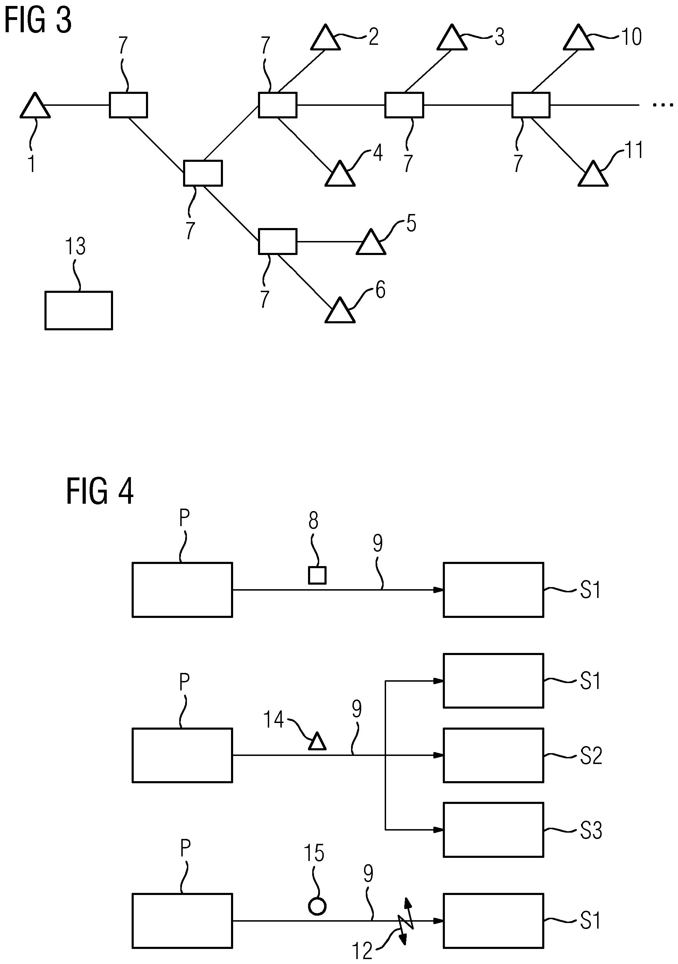

Die SPS 1 bildet - was die Übertragung von Steuersignalen an die Aktoren 5, 6 angeht, einen Publisher P (siehe Figuren 2 und 4) und die beiden Aktoren 5, 6 sind dann deren Subscriber S1, S2, S3 (1:n, konkret 1:2 Beziehung).

Was eine Übertragung von Daten von dem Sensor 4 an die SPS 1 angeht, stellt der Sensor 4 einen Publisher P dar, der mit der SPS 1 genau einen Subscriber S1, S2, S3 hat (1:1 Beziehung).

Gleiches gilt für die Übertragung von für einen Benutzer zu visualisierenden Daten von der SPS 1 zu dem Bildschirm 2 (1:1 Beziehung) und für Daten, welche eine an dem Bedienerpanel 3 erfolgte Benutzereingabe repräsentieren, und die an die SPS 1 zu senden sind (1:1 Beziehung).

Das Netzwerk ist TSN-fähig, also ein solches, welches einem oder mehreren als Time Sensitive Networking (TSN) bezeichneten Standards genügt. Insbesondere sind die Knotenpunkte vorliegend durch TSN-fähige Switches 7 gegeben. Zu den TSN-Standards gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere Standards.

Der Datenaustausch zwischen den Geräten 1-6 erfolgt vorliegend unter Verwendung des Kommunikationsprotokolls OPC UA, konkret der erweiterten Version OPC UA PubSub. Dabei wurde vor dem eigentlichen Betrieb des Netzwerkes bei dessen Einrichtung bzw. Engineering OPC UA mit QoS-Anforderungen projektiert.

Folgende Transportmechanismen für eine Datenübertragung zwischen Publisher P und zugehörigem bzw. zugehörigen Subscriber(n) S1, S2, S3 sind möglich:
- PubSub UDP Unicast (UDP Protokoll als 1:1 Beziehung)
- PubSub UDP Multicast (UDP Protokoll als 1:n Beziehung)
- PubSub UDP over TSN (UDP Protokoll in TSN-Tunnel als 1:n Beziehung)
- PubSub TSN (TSN-Stream als 1:n Beziehung)

UDP (siehe insbesondere RFC 768, RFC 8085) Uni- und Multicast sind sogenannte Best-Effort-Mechanismen, die
über keine QoS-Zusicherung verfügen.

UDP Unicast ist dabei eine 1:1 Beziehung, so dass die Bridges 7 ein von einem Publisher P stammendes Telegramm (Datenpaket) nur an einen Teilnehmer/Subscriber S1, S2, S3 senden müssen. UDP Multicast ist eine 1:n Beziehung. Ohne weitere Mechanismen, wie etwa IGMP(Internet Group Management Protocol) bzw. MMRP (Multiple MAC Registration Protocol) verhalten sich die Bridges 7 wie bei einem Broadcast und senden Telegramme, die an einem Port eingehen, über alle verbleibenden Ports. Das Netzwerk wird praktisch geflutet. Vorliegend kommt zur Reduktion der Netzwerkflutung bei UDP Multicast MMRR zum Einsatz.

Bei "UDP over TSN" wird die Daten-Kommunikation zusätzlich durch einen Tunnel, also Stream mit QoS-Eigenschaften ergänzt und geschützt. Solche TSN-Tunnel sind bezüglich Reservierung (IEEE 802.1Qav) und zeitgesteuert (IEEE 802.1Qbv) möglich. Im Rahmen des beschriebenen Ausführungsbeispiels kommt IEEE 802.1Qav zum Einsatz, insbesondere, da eine Reservierung mehre Flexibilität im Netzwerk bietet als ein Scheduling.

Bei PubSub TSN werden die Nutzdaten (das UADP-Protokoll) direkt als TSN-Payload übertragen. Es werden keine weiteren Netzwerkadressierungsmechanismen (UDP/IP) genutzt.

Der Anmelderin ist bekannt, dass bisher vor dem eigentlichen Betrieb bei der Projektierung des Netzwerkes von dem Anwender für die Geräten ein Transportmechanismus gewählt und dieser beibehalten wird, auch wenn sich die Begebenheiten im Netzwerk ändern.

In der FIG 2 ist dies - rein schematisch und stark vereinfacht - dargestellt.

Als Transportmechanismus wird bei dem beschriebenen Ausführungsbeispiel PubSub UDP Unicast 8 (siehe Figuren 2 und 4) gewählt und dieser wird beibehalten, auch dann, wenn weitere Subscriber S1, S2, S3 , für den Publisher P hinzukommen, und/oder es zu Problemen, etwa Störungen durch eine zu hohe Auslastung kommt.

In der FIG 2 oben ist schematisch ein Publisher P mit genau einem zugehörigen Subscriber S1 gezeigt. Der gewählte Transportmechanismus PubSub UDP Unicast ist in der FIG schematisch durch ein mit dem Bezugszeichen 8 versehenes Quadrat angedeutet, welches oberhalb des die Datenübertragung andeutenden Pfeils 9 angeordnet ist.

Der PubSub UDP Unicast Mechanismus bleibt unverändert erhalten, auch wenn zwei Subscriber S2, S3 hinzugekommen sind, der Publisher P also - wie in FIG 2 mittig gezeigt - drei Subscriber, S1, S2, S3 hat.

Für das in FIG 1 gezeigte Netzwerk könnte dies beispielsweise der Fall sein, wenn zusätzlich zu dem Bildschirm 2 einer oder mehrere, vorliegend zwei weitere Bildschirme 10, 11 angeschlossen werden, auf denen ebenfalls von der SPS 1 stammende Daten visualisiert werden sollen. Dies ist in FIG 3 - erneut rein schematisch - dargestellt.

Das gleiche gilt, wenn es zu Störungen aufgrund hoher Auslastung kommt, was in der FIG 2 unten durch einen Blitz 12 angedeutet ist. Eine erhöhte Auslastung kann darauf zurückzuführen sein, dass andere Netzwerkteilnehmer einen größeren Datenaustausch vornehmen, wie es z.B. bei einem Download auftritt.

Diese unflexible Vorgehensweise kann keine über den gesamten Betrieb des Netzwerkes optimale Ausnutzung der NetzwerkRessourcen und keine durchgehend zuverlässige Datenübertragung gewährleisten.

Erfindungsgemäß wird dies durch eine dynamische Anpassung des Publisher-Transportmechanismus ermöglicht. Konkret wird die Anzahl der Subscriber S1, S2, S3 und die aktuelle Netzwerkauslastung überwacht und in Reaktion auf eine Änderung der Subscriber-Anzahl und/oder der Netzwerkauslastung der von wenigstens einem Publisher P verwendete Transportmechanismus angepasst.

Für die Netzwerküberwachung ist eine zentrale Überwachungseinrichtung 13 (vgl. Figuren 1 und 3) in Form eines Computers vorgesehen, auf welcher eine SNMP(Simple Network Management Protocol)-Anwendung installiert ist. Die Überwachungseinrichtung 13 ist mit jedem der Geräte 1, 2, 3, 4, 5, 6, 10, 11 verbunden, dies ebenfalls über das Netzwerk. Mit Hilfe der Überwachungseinrichtung kann erfasst werden, wenn sich für einen Publisher P im Netzwerk die Subscriber-Anzahl ändert, insbesondere von genau einem auf zwei oder mehr Subscriber S1, S2, S3. Weiterhin kann mittels dieser erfasst werden, wenn sich für einen Subscriber S1, S2, S3 der Jitter und/oder die Latenz, und/oder die Paketverlustrate ändert. Dies kann etwa durch Statuszählen im jeweiligen Listener/Subscriber S1, S2, S3 selbst oder auch anhand der verworfenen Pakete in den Switches 7 mithilfe von z.B. SNMP erfolgen.

Wird mittels der Überwachungseinrichtung 13 registriert, dass sich die Anzahl der Subscriber S1, S2, S3 eines oder mehrerer Publisher P ändert, wird für den (jeweiligen) Publisher P, der von einer solchen Änderung betroffen ist, der Transportmechanismus automatisch geändert. Bei dem dargestellten Ausführungsbeispiel wird der Transportmechanismus in Reaktion auf das Anschließen der zwei weiteren Bildschirme 10, 11 (vgl. FIG 3) von PubSub UDP Unicast zu PubSub UDP Multicast geändert. In der FIG 4 ist dies - rein schematisch dargestellt. Oben ist nochmals die Ausgangslage gezeigt, welche dem Fall entspricht, dass die SPS 1 an genau einen Bildschirm zu visualisierende Daten via PubSub UDP Unicast 8 überträgt.

Bei einer Änderung auf zwei oder mehr Subscriber S1, S2, S3 wird der Transportmechanismus von PubSub UDP Unicast 8 zu PubSub UDP Multicast geändert. In der FIG 4 ist der PubSub UDP Multicast Mechanismus durch ein mit dem Bezugszeichen 14 versehenes Dreieck repräsentiert.

Alternativ dazu, dass in Reaktion auf eine Erhöhung der Subscriber-Anzahl wenigstens eines Publishers P ausgehend von dem Transportmechanismus PubSub UDP Unicast 8 zu PubSub UDP Multicast 14 gewechselt wird, kann für den Fall, dass ein Publisher P via PubSub UDP Unicast over TSN überträgt und wenigstens einen Subscriber S1, S2, S3 dazubekommt, auf PubSub UDP Multicast over TSN 15 gewechselt werden. Dies wird insbesondere der Fall sein, wenn ein Publisher P, welcher Daten in Echtzeit an einen Subscriber S1, S2, S3 überträgt bzw. übertragen muss, einen oder mehrere weitere Subscriber S1, S2, S3 erhält.

Für das umgekehrte Szenario, wenn die Subscriber-Anzahl für wenigstens einen Publisher P abnimmt, insbesondere von mehreren Subscribern S1, S2, S3 auf genau einen Subscriber S1, S2, S3 sinkt, kann selbstverständlich ein zu diesen Transportmechanismus-Wechselmöglichkeiten inverser Wechsel erfolgen, also von PubSub UDP Multicast 14 auf PubSub UDP Unicast 8 bzw. von PubSub UDP Multicast over TSN zu PubSub UDP Unicast over TSN 15.

Die Änderung des Transportmechanismus erfolgt automatisiert, wofür zumindest diejenigen Geräte im Netzwerk, welche Publisher P darstellen (können), vorliegend sämtliche Geräte 1, 2, 3, 4, 5, 6 entsprechend eingerichtet sind. Durch eine Benachrichtigung von der Netzwerkänderung, z.B. durch Änderung eines Managed Objects durch SNMP oder den Empfang einer speziellen Nachricht, ändert der betroffene Publisher P die Art der Datenübertragung durch den Aufbau einer neuen Verbindung und den Abbau der Verbindung in der alten Qualität.

Bei dem dargestellten Ausführungsbeispiel findet eine Änderung des Transportmechanismus nicht nur in Reaktion auf eine Änderung der Subscriber-Anzahl sondern auch in Reaktion auf eine Änderung der Netzwerkauslastung und/oder des Datenverlustes statt. Hierfür wird mittels der Überwachungseinrichtung 13 zusätzlich überwacht, ob sich die Auslastung des Netzwerkes, insbesondere der Jitter und/oder die Latenz, und/oder der Paketverlust wenigstens eines Subscribers geändert hat, und in Reaktion auf eine solche Änderung der von wenigstens einem Publisher P verwendete Transportmechanismus geändert.

Konkret wird der verwendete Transportmechanismus von einem Publisher P automatisch geändert, wenn er von der Überwachungseinrichtung 13 die Information erhalten hat, dass sich für wenigstens einen seiner Subscriber S1, S2, S3 der Jitter und/oder die Latenz, und/oder der Paketverlust geändert hat.

Erhöht sich einer dieser Parameter für einen Subscriber S1, S2, S3, wird der von dem Publisher P verwendete Transportmechanismus gemäß einer der folgenden Möglichkeiten geändert:
- von PubSub UDP Unicast zu PubSub UDP Unicast over TSN,
- von PubSub UP Multicast zu PubSub UDP Multicast over TSN,
- von PubSub UDP Unicast over TSN zu PubSub TSN, insbesondere bei gleichbleibendem Shaper,
- von PubSub UDP Multicast over TSN zu PubSub TSN, insbesondere bei gleichbleibendem Shaper,
- von PubSub TSN zu PubSub TSN mit zyklischem Scheduler, insbesondere TAS.

Wird vorliegend registriert, dass sich für die Aktoren 5, 6, welche Daten von der SPS 1 empfangen, die Latenz aufgrund einer erhöhten Netzwerkauslastung steigt, insbesondere einen vorgegebenen maximalen Wert überschreitet, wird ausgehend von dem Transportmechanismus PubSub UDP Unicast zu PubSub UDP Unicast over TSN 15 gewechselt. Von einem anderen Mechanismus startend würde gemäß der vorstehenden Liste gewechselt.

Über den Wechsel zu PubSub UDP Unicast over TSN 15 werden geschützte Verbindungen (Streams) mit garantierter Latenz zwischen der SPS und den Aktoren 5, 6 erhalten und es wird sichergestellt, dass die Aktoren 5, 6 weiterhin Daten in Echtzeit erhalten, was für einen reibungsfreien Betrieb erforderlich ist.

Bei PubSub UDP Unicast over TSN wird eine Streamreservierung bie TSN ausgelöst. Der (betroffene) Publisher P meldet sich als Talker am Netzwerk an. Jeder Subscriber S1, S2, S3 stellt für das TSN-Netzwerk einen Listener dar. Durch die Ressourcen Reservierung im TSN-Netzwerk, die über das Stream Reservation Protokoll (SRP) erfolgen kann, wird bei der Listener-Anmeldung eine Streamreservierung aufgebaut, welche als Datenadresse die von PubSub für den Datenaustausch gewählte MAC Adresse beinhaltet.

Der Wechsel von PubSub UDP Unicast 8 zu PubSub UDP Unicast over TSN 15 ist in der FIG 4 unten rein schematisch und für nur einen Subscriber S1 dargestellt, wobei der PubSub UDP Unicast over TSN Mechanismus durch einen mit dem Bezugszeichen 15 versehenen Kreis angedeutet ist. Die Störung aufgrund erhöhter Netzwerkauslastung, im Lichte derer auf TSN gewechselt wurde, ist in der FIG 4 unten - analog zur FIG 2 unten - durch einen Blitz 12 angedeutet.

Es versteht sich, dass für den Fall, dass die Subscriber S1, S2, S3 mehrerer Publisher P von einer Störung aufgrund einer Änderung der Netzwerkauslastung betroffen sind, für mehrere, insbesondere alle betroffene Publisher P der Transportmechanismus geändert wird, wobei die Änderung für jeden Publisher P bevorzugt einem Fall aus der vorstehenden Liste entspricht.

Weiterhin sei angemerkt, dass natürlich auch in Bezug auf eine Änderung der Netzwerkauslastung gilt, dass für den Fall, dass diese sinkt bzw. gesunken ist, etwa der Jitter und/oder die Latenz und/oder der Paketverlust insbesondere für wenigstens einen Subscriber S1, S2, S3 wenigstens eines Publishers, bevorzugt um einen vorgegebenen Wert gesunken ist, ein Wechsel des Transportmechanismus in umgekehrter Richtung, also in der vorstehenden Liste von einem Mechanismen auf der rechten Seite zu dem entsprechenden Mechanismus auf der linken.

Das industrielle Netzwerk mit den Geräten 1, 2, 3, 4, 5, 6, 10, 11 Bridges 7, und der zugehörigen Überwachungseinrichtung 13 gemäß den Figuren 1 bzw. 3 ist Bestandteil eines Ausführungsbeispiels einer erfindungsgemäßen Vorrichtung zur Durchführung des erfindungsgemäßen Verfahrens.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Daten-Kommunikation in einem insbesondere industriellen Netzwerk unter Verwendung von OPC UA, insbesondere OPC UA PubSub, bei dem Daten von einem oder mehreren Publishern (P) an einen oder mehrere Subscriber (S1, S2, S3) gesendet werden,
**dadurch gekennzeichnet, dass**
überwacht wird, ob sich die Anzahl der Subscriber (S1, S2, S3) wenigstens eines Publishers (P) ändert und in Reaktion auf eine Änderung der Anzahl der Subscriber (S1, S2, S3) wenigstens eines Publishers (P) der von wenigstens einem Publisher (P) verwendete Transportmechanismus insbesondere automatisch geändert wird, und/oder überwacht wird, ob sich die Menge an Datenverlust insbesondere für wenigstens einen Subscriber (S1, S2, S3) ändert, und in Reaktion auf eine Änderung der Menge an Datenverlust der von wenigstens einem Publisher (P) verwendete Transportmechanismus insbesondere automatisch geändert wird, und/oder überwacht wird, ob sich die Netzwerkauslastung ändert und in Reaktion auf eine Änderung der Netzwerkauslastung der von wenigstens einem Publisher (P) verwendete Transportmechanismus insbesondere automatisch geändert wird.

2. Verfahren nach Anspruch 1,
**dadurch gekennzeichnet, dass**
der Transportmechanismus von dem wenigstens einen Publisher (P) bevorzugt automatisch geändert wird.

3. Verfahren nach Anspruch 1 oder 2,
**dadurch gekennzeichnet, dass**
der von wenigstens einem Publisher (P) verwendete Transportmechanismus in Reaktion auf eine Änderung der Anzahl seiner Subscriber (S1, S2, S3), insbesondere von genau einem auf zwei oder mehr Subscriber (S1, S2, S3), und/oder eine Änderung der Menge an Datenverlust insbesondere für wenigstens einen seiner Subscriber und/oder eine Änderung der Netzwerkauslastung bevorzugt automatisch geändert wird.

4. Verfahren nach einem der vorhergehenden Ansprüche,
**dadurch gekennzeichnet, dass**
der von mehreren Publishern (P) verwendete Transportmechanismus in Reaktion auf eine Änderung der Anzahl der Subscriber (S1, S2, S3) des jeweiligen Publishers (P) und/oder in Reaktion auf eine Änderung der Menge an Datenverlust insbesondere für wenigstens einen Subscriber (S1, S2, S3) des jeweiligen Publishers (P) und/oder in Reaktion auf eine Änderung der Netzwerkauslastung bevorzugt automatisch geändert wird.

5. Verfahren nach einem der vorhergehenden Ansprüche,
**dadurch gekennzeichnet, dass**
von wenigstens einem, insbesondere jedem Publisher (P) ein Transportmechanismus verwendet wird, der ausgewählt ist aus der Gruppe PubSub UDP Unicast (8), PubSub UDP Multicast (14), PubSub UDP Unicast over TSN (15), PubSub UDP Multicast over TSN, PubSub TSN, PubSub TSN mit zyklischem Scheduler.

6. Verfahren nach Anspruch 5,
**dadurch gekennzeichnet, dass**
für den Fall, dass die Anzahl der Subscriber (S1, S2, S3) im Netzwerk insbesondere um einen vorgegebenen Wert gestiegen ist, der von wenigstens einem Publisher (P) verwendete Transportmechanismus bevorzugt automatisch von PubSub UDP Unicast (8) zu PubSub UDP Multicast (14), und/oder von PubSub UP Unicast over TSN zu PubSub UDP Multicast over TSN geändert wird.

7. Verfahren nach Anspruch 5 oder 6,
**dadurch gekennzeichnet, dass**
dass für den Fall, dass die Anzahl der Subscriber (S1, S2, S3) wenigstens eines Publishers (P) auf nur noch einen Publisher (P) gesunken ist, der von dem wenigstens einen Publisher (P) verwendete Transportmechanismus bevorzugt automatisch von PubSub UDP Multicast (14) zu PubSub UDP Unicast (8), und/oder von PubSub UP Multicast over TSN zu PubSub UDP Unicast over TSN geändert wird.

8. Verfahren nach einem der Ansprüche 5 bis 7,
**dadurch gekennzeichnet, dass**
für den Fall, dass die Auslastung des Netzwerkes, insbesondere der Jitter und/oder die Latenz, und/oder der Paketverlust insbesondere für wenigstens einen Subscriber (S1, S2, S3) bevorzugt um einen vorgegebenen Wert gestiegen ist, der von wenigstens einem Publisher (P) verwendete Transportmechanismus bevorzugt automatisch
von PubSub UDP Unicast (8) zu PubSub UDP Unicast over TSN (15), und/oder von PubSub UDP Multicast zu PubSub UDP Multicast over TSN, und/oder von PubSub UDP Unicast over TSN zu PubSub TSN, insbesondere bei gleichbleibendem Shaper, und/oder von PubSub UDP Multicast over TSN zu PubSub TSN, insbesondere bei gleichbleibendem Shaper, und/oder von PubSub TSN zu PubSub TSN mit zyklischem Scheduler, insbesondere TAS, geändert wird.

9. Verfahren nach einem der Ansprüche 5 bis 8,
**dadurch gekennzeichnet, dass**
für den Fall, dass die Auslastung des Netzwerkes, insbesondere der Jitter und/oder die Latenz und/oder der Paketverlust insbesondere für wenigstens einen Subscriber (S1, S2, S3), bevorzugt um einen vorgegebenen Wert gesunken ist, der von wenigstens einem Publisher (P) veränderte Transportmechanismus bevorzugt automatisch von PubSub UDP Unicast (15) over TSN zu PubSub UDP Unicast (8), und/oder von PubSub UP Multicast over TSN zu PubSub UDP Multicast, und/oder von PubSub TSN zu PubSub UDP Unicast over TSN, insbesondere bei gleichbleibendem Shaper, und/oder von PubSub TSN zu PubSub UDP Multicast over TSN, insbesondere bei gleichbleibendem Shaper, und/oder von PubSub TSN mit zyklischem Scheduler, insbesondere TAS, zu PubSub TSN ohne zyklischen Scheduler,
geändert wird.

10. Verfahren nach einem der vorhergehenden Ansprüche,
**dadurch gekennzeichnet, dass**
die aktuellen Anzahl der Subscriber (S1, S2, S3) und/oder die aktuelle Auslastung des Netzwerkes, insbesondere der Jitter und/oder die Latenz und/oder der Paketverlustes bevorzugt für wenigstens einen Subscriber (S1, S2, S3), durch Abfrage des Gerätestatus wenigstens eines Subscribers (S1, S2, S3), insbesondere aller Subscriber sämtlicher Publisher (P), und/oder durch Überwachung wenigstens eines Knotenpunktes bevorzugt unter Nutzung von SNMP ermittelt wird.

11. Verfahren nach einem der vorhergehenden Ansprüche,
**dadurch gekennzeichnet, dass**
für den Fall, dass von wenigstens einem Publisher (P) ein Multicast-Transportmechanismus verwendet wird, IGMP und/oder MMRP zur Begrenzung der Netzwerkflutung verwendet wird.

12. Steuerungsverfahren für einen industriellen technischen Prozess oder ein Fahrzeug, bei dem zwischen wenigstens zwei Komponenten (1, 2, 3, 4, 5, 6, 10, 11) einer Automatisierungsanlage Daten unter Durchführung des Verfahrens nach einem der vorhergehenden Ansprüche ausgetauscht werden und auf Basis der ausgetauschten Daten eine Steuerung des industriellen technischen Prozesses oder Fahrzeugs erfolgt.

13. Vorrichtung, die zur Durchführung des Verfahrens nach einem der Ansprüche 1 bis 12 ausgebildet und eingerichtet ist, insbesondere umfassend:
- eines oder mehrere Geräte (1, 2, 3, 4, 5, 6, 10, 11), die jeweils einen OPC UA Publisher (P) in einem Netzwerk bilden,
- mehrere Geräte (1, 2, 3, 4, 5, 6, 10, 11), die jeweils einen OPC UA Subscriber (S1, S2, S3) in dem Netzwerk bilden,
- Mittel, die ausgebildet und eingerichtet sind, um im Betrieb zu überwachen, ob sich die Anzahl der Subscriber (S1, S2, S3) wenigstens eines Publishers (P) und/oder die Auslastung des Netzwerkes ändert.

14. Computerprogramm umfassend Programmcode-Mittel zur Durchführung des Verfahrens nach einem der Ansprüche 1 bis 12.

15. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 12 durchzuführen.
